# EUROPÄISCHE PATENTANMELDUNG

(11) **EP 2 366 541 A1**
(43) Veröffentlichungstag der Anmeldung: **21.09.2011**
(21) Anmeldenummer: 10002801.8
(22) Anmeldetag: 17.03.2010
(51) Int. Cl.: B32B 5/26, D04H 1/46, E04B 1/84, G10K 11/162

(54) **Faserverbund-Akustik-Dämmmaterial**

(71) Anmelder: Groz-Beckert KG, 72458 Albstadt (DE)
(72) Erfinder: Kühl, Thomas, Dr., 72514 Inzigkofen (DE); Svejda, Miroslav, 37316 Dobra Voda (CZ)
(74) Vertreter: Rüger, Barthelt & Abel Patentanwälte

(57) **Zusammenfassung**

Ein erfindungsgemäßes Dämpfungsmaterial (11) besteht aus einem Grundmaterial, das aus Fasern gebildet ist, die in einem lockeren Zusammenhalt miteinander stehen. Beispielsweise sind die Fasern miteinander wenig verschlungen oder auch verklebt. Dieses Grundmaterial wird stellenweise verdichtet, indem die Fasern umorientiert und dadurch stärker miteinander verschlungen oder verklebt werden. Es entstehen somit Zonen (17) und (18) unterschiedlicher Verdichtung, wodurch sich die schalldämmende wirkung des Dämpfungsmaterials, wie gewünscht, erhöhen und einstellen lässt.

## Beschreibung

Die Erfindung betrifft ein akustisches Dämm- oder Dämpfungsmaterial nach Art eines aus Fasern bestehenden Körpers. Insbesondere betrifft die Erfindung ein solches räumlich ausgebildetes, d.h. nicht lediglich flächenhaftes Dämm- oder Dämpfungsmaterial.

Akustische Dämpfungsmaterialien sind aus verschiedensten Werkstoffen bekannt, wie beispielsweise Mineralwolle, Glaswolle oder aus Naturfasern oder Kunstfasern. In jedem Fall soll von dem Dämpfungsmaterial Schallenergie absorbiert werden, d.h. die Schallschwingungen sollen gedämpft werden, indem die Schwingungsenergie der Schallwellen durch Reibung in Wärme umgesetzt wird. Dabei soll der Ausbildung von Resonanzen und der Ausbildung von stehenden Wellen vorgebeugt werden.

Fasermaterialien mit ungeordneten Fasern können eine hohe akustische Dämpfungswirkung haben. Dabei ist es prinzipiell möglich, Filzkörper relativ variabel zu gestalten, wie es beispielsweise aus der EP 2 034 072 A1 hervorgeht. Diese Druckschrift befasst sich mit einem Hygieneartikel, wie beispielsweise Sanitärmaterialien. Zur Herstellung derselben wird ein Fasex-vlies entlang streifenförmiger Bereiche unterschiedlich stark vernadelt, so dass sich in dem Material längliche parallel zueinander orientierte Zonen höherer Faserdichte ergeben. Inwieweit ein solches Material einer anderweitigen Verwendung als im medizinischen oder pflegerischen Bereich zugeführt werden kann, ist offen.

Es ist Aufgabe der Erfindung, ein akustisches Dämpfungsmaterial mit verbesserter Wirkung anzugeben.

Das erfindungsgemäße Dämpfungsmaterial bildet einen wirrfaserkörper, d.h. einen aus ungeordneten Fasern bestehenden Körper. In diesem können Fasern zonenweise auch parallel zueinander angeordnet sein. Die Fasern können miteinander verschlungen sein, wobei der Grad der Verschlingung in wenigstens zwei unterschiedlichen Zonen unterschiedlich stark ausgebildet ist. Der Wirrfaserkörper kann zum Beispiel erzeugt werden, indem ein lockerer Faserflor oder ein Vlies (zum Beispiel aus Polyester) in bestimmten Zonen durch mechanische oder auch thermische Einwirkung mehr oder weniger verfestigt wird. So entsteht ein akustischer Dämmstoff mit räumlich unterschiedlicher Dichte. Die Erfindung bietet hier eine Handhabe, diesen Dämmstoff kostengünstig herzustellen.

Das akustische Dämpfungsmaterial kann in Form einer Matte bereitgestellt werden. Die Matte kann beispielsweise aus Glasfaserwolle oder Mineralwolle oder auch anderen Materialien hergestellt sein. Die Fasern der Matte liegen in dem Faserflor vorzugsweise locker aber zusammenhaltend beieinander. Dies kann erreicht werden, indem die Fasern derart miteinander verschlungen sind, dass zumindest ein loser Zusammenhalt der Matte gegeben ist. Die Fasern können parallelisiert oder durch einen Kreuzlegeprozess auch in Schichten übereinander kreuzweise angeordnet sein.

Der Faserflor kann beispielsweise zunächst durch an sich bekannte Verfahren der Kardierung oder der Spinnvlieserzeugung bereitgestellt werden. Durch zonenweise Verdichtung wird der lockere Faserflor in den gewünschten Zustand überführt, indem Zonen geschaffen werden, in denen der Grad der Faserverschlingung gegenüber dem übrigen Körper bzw. der übrigen Matte erhöht ist. Die erhöhte Faserverschlingung kann durch mechanisches Vernadeln, z.B. mittels Filznadeln, durch Wasserstrahlverfestigung oder Ähnliches erreicht werden. Alternativ kann eine lokale Verdichtung, zum Beispiel durch thermisches Verpressen, erreicht werden. Durch die Verdichtung wird der Faserkörper in den verdichteten Zonen kompakter, wodurch pro Volumeneinheit mehr Verschlingungen zu zählen sind als in nicht verdichtetem Material.

Das akustische Dämpfungsmaterial kann in Gestalt von Wirrfaserkörpern mit definierter geometrischer Gestalt oder auch in Form von Matten bereitgestellt werden, die vor dem Einsatz auf gewünschte Größe und Abmessung zugeschnitten werden. Charakteristisch für das Dämpfungsmaterial ist, dass mindestens zwei, vorzugsweise aber mehrere Zonen mit wenigstens zwei verschiedenen Graden der Faserverschlingung existieren.

Die Zonen unterschiedlicher Faserverschlingung weisen vorzugsweise auch unterschiedliche Faserdichten auf. Es entstehen dadurch in dem Dämmmaterial Zonen unterschiedlichen Porenvolumens und unterschiedlicher akustischer Härte, so dass eine hohe akustische Dämpfungswirkung erreicht werden kann.

Die Zonen unterschiedlich starker Faserverschlingung können in einem regelmäßigen oder vorzugsweise unregelmäßigen Muster angeordnet sein, wodurch eine breitbandige akustische Dämpfungswirkung erzielbar ist.

Das erfindungsgemäße Dämpfungsmaterial kann aus einheitlichen Fasern oder auch aus unterschiedlichen Fasern, beispielsweise Fasern verschiedener Länge und/oder verschiedener Dicke, aus Fasern, die aus einem einheitlichen Material bestehen wie auch aus Fasern hergestellt werden, die aus unterschiedlichen Fasern bestehen, d.h. aus einem Fasergemisch. Fasern verschiedener Abmessungen oder verschiedenen Materials können bedarfsweise auch in unterschiedlichen Zonen konzentriert sein, um zusätzliche zu der zonenweise unterschiedlichen Faserverschlingung auch Zonen unterschiedlicher Materialien zu erzeugen.

Vorzugsweise sind die Fasern in Zonen geringer Faserverschlingung vorwiegend in einer Ebene (oder in Kreuzlage) orientiert, wobei die Fasern in der Ebene wahlweise parallel oder auch verschieden orientiert sein können, sich also ein- oder mehrfach überkreuzen, aber wenig verschlingen. Wenn das Dämmmaterial als Matte bereitgestellt wird, liegen die Fasern, insbesondere in den Zonen geringer Faserverschlingung, vorzugsweise vorwiegend in der Ebene dieser Matte. In Zonen größerer Faserverschlingung sind die Fasern, zumindest vorzugsweise, zu einem erhöhten Anteil in einer Richtung senkrecht zu dieser Ebene orientiert. Dadurch entstehen Verdichtungszonen, die der Matte oder dem sonstigen Faserkörper eine gewisse mechanische Stabilität und insbesondere eine Zusammenhalt verleihen.

Die Zonen stärkerer Faserverschlingung können als regelmäßig oder unregelmäßig ausgebildete Inseln in dem Dämpfungsmaterial angeordnet sein. Vorzugsweise sind sie als streifenförmige, wiederum vorzugsweise geradlinige, Bereiche ausgebildet, die sich zum Beispiel in Mattenquerrichtung und/oder in Mattenlängsrichtung erstrecken können. Sie können sich außerdem in schrägen Richtungen, beispielsweise diagonal erstrecken. Vorzugsweise erstrecken sich die verdichteten Zonen durch die gesamte Mattendicke von der Oberseite zu der Unterseite derselben.

Bei einer besonders vorteilhaften Ausführungsform umfasst das Dämpfungsmaterial mindestes zwei Schichten, in denen Zonen mit unterschiedlicher Faserverschlingung ausgebildet sind, wobei diese Zonen in den beiden Schichten unterschiedlich, zum Beispiel nicht deckungsgleich angeordnet sind. Es ist möglich, in diesen Schichten Verdichtungszonen, d.h. Zonen mit erhöhter Faserverschlingung, auszubilden, die eine Verbindung zu der jeweils anderen Schicht aufweisen. Zum Beispiel können die Verdichtungszonen in diesen Schichten durch Vernadeln, Wasserstrahlverfestigung oder dergleichen hergestellt sein. Ein Faserkörper oder eine entsprechende Matte kann schichtweise hergestellt werden. Eine solche Schicht wird, wie oben beschrieben, zum Beispiel durch zonenweise Verfestigung des Faserkörpers erzeugt. Nach dem Übereinanderlegen zweier oder mehrerer solcher Schichten können diese stellenweise wiederum eine Verfestigung erfahren, wobei die Faserverschlingung stellen-oder zonenweise (bereichsweise) zunimmt und dabei auch eine Verbindung zwischen den Schichten hergestellt wird.

Nachfolgend sind Ausführungsbeispiele der Erfindung erläutert. Aus diesen Ausführungsbeispielen sowie der zugehörigen Zeichnung und Unteransprüchen gehen weitere Einzelheiten vorteilhafter Ausführungsformen der Erfindung hervor. Es zeigen:
Figur 1 ein Dämpfungsmaterial mit eingestreuten Zonen höherer Faserverschlingung, in perspektivischer schematischer Darstellung,
Figur 2 eine Vorrichtung zur Erzeugung eines Dämpfungsmaterials nach Figur 1, in schematischer perspektivischer Prinzipdarstellung,
Figur 3 ein Dämpfungsmaterial mit lokalen Verdichtungszonen, in perspektivischer Prinzipdarstellung,
Figur 4 eine abgewandelte Ausführungsform eines erfindungsgemäßen Dämpfungsmaterial mit streifenartigen Verdichtungszonen und Hohlräumen, in perspektivischer Prinzipdarstellung,
Figur 5 ein weiteres Ausführungsbeispiel eines erfindungsgemäßen Dämpfungsmaterials mit Mehrschichtaufbau und streifenförmigen Verdichtungszonen, in perspektivischer Prinzipdarstellung,
Figur 6 eine abgewandelte Ausführungsform eines Dämpfungsmaterials mit Schichtaufbau, in perspektivischer Prinzipdarstellung, und
Figur 7 eine Prinzipdarstellung eines möglichen Herstellungsprozesses für ein erfindungsgemäßes Dämpfungsmaterial.

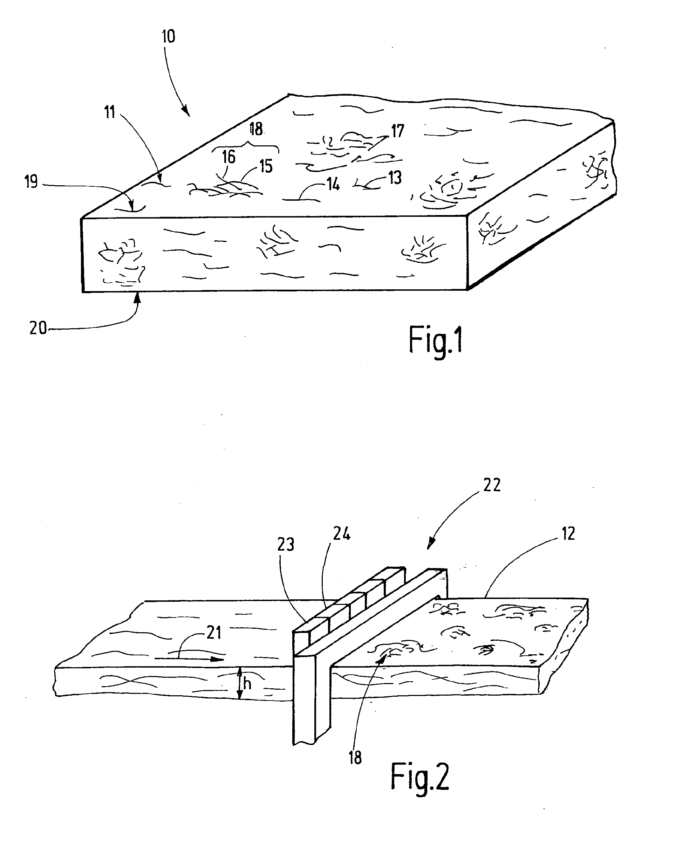

In Figur 1 ist ein Wirrfaserkörper 10 veranschaulicht, der aus einem akustischen Dämpfungsmaterial 11 besteht und beispielsweise zur Schalldämmung oder Schalldämpfung in Räumen, in oder an Raumdecken oder Wänden, in Lautssprecherboxen oder anderen akustischen Einrichtungen eingesetzt werden kann. Der Wirrfaserkörper 10 ist hier als flacher, quaderförmiger Körper dargestellt. Er kann jedoch auch jede andere für den jeweiligen Verwendungszweck geeignete Form haben. Im vorliegenden Ausführungsbeispiel stellt der Wirrfaserkörper 10 einen Abschnitt einer vorzugsweise endlos gefertigten Matte 12 dar, wie sie in Figur 2 veranschaulicht ist.

Das Dämpfungsmaterial 11 wird durch eine unüberschaubar große Anzahl einzelner Fasern 13, 14, 15, 16, gebildet, die zum Beispiel aus einem einheitlichen oder auch aus unterschiedlichen Materialien bestehen können. Die Fasern 13 bis 16 sowie die übrigen in Figur 1 angedeuteten nicht eigens referenzierten Fasern können ganz oder teilweise aus Glas, Keramik, wolle, Zellulose, Kunststoff, einem oder mehreren Elastomeren, einem oder mehreren Polymeren oder dergleichen bestehen. Die Faser können aus nur einem dieser Materialien bestehen. Es kann aber auch ein homogenes oder inhomogenes Gemisch aus Fasern vorhanden sein, die aus unterschiedlichen der genannten Materialien bestehen.

Wenigstes einige der Fasern 13 bis 16 können aus Metall bestehen oder aus einem nichtmetallischen Werkstoff, der auch metallisierte sein kann. Die Fasern 13 bis 16 können einheitliche Durchmesser, Querschnitte und Längen oder auch unterschiedliche Durchmesser und/oder unterschiedliche Querschnitte und/oder unterschiedliche Längen aufweisen.

Die Fasern 13 bis 16 bilden einen Faserflor, in dem sie locker aber zusammenhaltend beieinander liegen. Hierbei lassen sich in dem Wirrfaserkörper 10 unterschiedliche Zonen unterscheiden. Die Fasern 13, 14 liegen in einer lockeren Zone 17 mit geringer Faserverschlingung während die Fasern 15, 16 in einer verfestigten, dichteren Zone 18 mit höherer Faserverschlingung liegen. Die Zone 17 wird beispielsweise durch den oben genannten lockeren Faserflor gebildet, während die Zone 18 eine Verdichtungszone ist. Es sind in den Wirrfaserkörper 10 vorzugsweise mehrere Zonen höherer Faserverschlingung vorhanden, wie zum Beispiel die Zone 18, wobei diese verschiedenen Zonen regelmäßig oder unregelmäßig geformt und/oder angeordnet sein können. Sie können sich über die gesamte Höhe des Faserkörpers 10 (in Figur 1 vertikal) bzw. der Matte 12 erstrecken.

In der Zone 17 liegen die Fasern 13, 14 vorwiegend innerhalb einer zur Oberseite 19 bzw. Unterseite 20 des Wirrfaserkörpers 10 parallelen Ebene, wobei die Fasern 13, 14 vorzugsweise im Wesentlichen parallel und bezogen auf Figur 2 vorzugsweise in Mattenlängsrichtung 21 orientiert sind. Die Fasern 13, 14 sowie alle weiteren in Mattenlängsrichtung orientierten Fasern sind beispielsweise in einem Kämmprozess durch Kardieren einer Natur- oder Kunstfaser zu einem lockeren Flor mit parallelisierten Fasern zusammengeführt worden. Zur Herstellung des Faserkörpers 10 nach Figur 1 wird die so gewonnene Matte 12 durch eine Bearbeitungsstation 22 geführt, die ein oder mehrere Organe 23, 24 aufweist, die permanent oder zu gewählten Zeitpunkten auf die darunter befindliche oder darunter durchlaufende Matte 12 einwirken, um eine lokale, stärkere Verschlingung der Fasern, wie beispielsweise der Fasern 15, 16 zu bewirken und somit jeweils eine Zone 18 mit höherer Faserverschlingung zu erzeugen. Die Organe 23, 24 können mechanisch oder nichtmechanisch auf die Matte 12 einwirken. Es kann sich insbesondere bei Kunstfasern um Wärmequellen, Strahlungsquellen oder auch um Organe zur Abgabe von Strahlen organischer oder nicht organischer Fluide wie beispielsweise Wasser handeln. Die Organe 23, 24 können alternativ auch mechanische Werkzeuge wie beispielsweise Filznadeln oder dergleichen aufweisen, mit denen die Matte 12 zu behandeln ist.

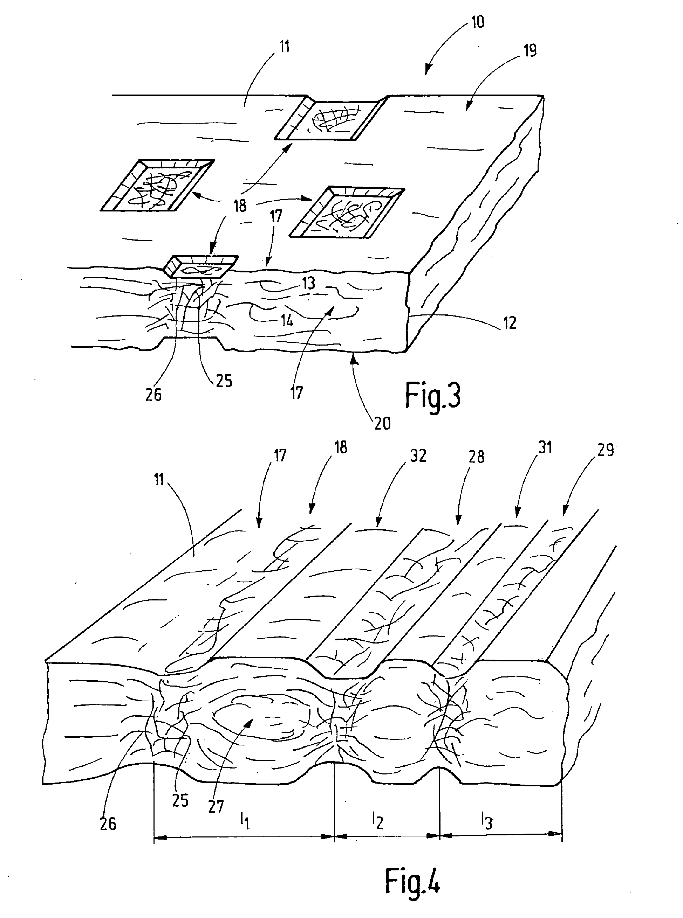

Zur weiteren Erläuterung des erfindungsgemäßen Dämpfungsmaterials 11 wird auf Figur 3 Bezug genommen. Dieses wird wiederum ausgehend von einer Matte 12 gebildet, in der die Fasern 13, 14 im lockeren Faserverbund weitgehend parallelisiert oder auch sich überkreuzend im Wesentlichen parallel zu der Oberseite 19 orientiert, sind. In der Zone 18, die beispielsweise durch eine lokale Wasserstrahlverfestigung der Matte 12 erzeugt worden ist, sind Fasern 25, 26 aus der Horizontalorientierung heraus in eine ungefähr senkrechte Lage bezüglich der Oberseite 19 umorientiert worden. Dadurch entsteht in den Zonen 18 eine stärkere Verschlingung der Fasern untereinander als in der übrigen Zone 17. Zugleich geht mit dieser stärkeren Faserverschlingung, wie sie beispielsweise durch wasserstrahlverfestigung erzeugt worden sein kann, ein Verdichtungseffekt einher. In Figur 3 und 4 ist gezeigt, wie die Fasern aus ihrer Normalorientierung durch den Bearbeitungsprozess in den Zonen 18 lokal aus ihrer vornehmlich horizontalen Lage in eine schräge oder senkrechte Lage umorientiert worden sind, wobei gleichzeitig eine Materialverdichtung stattgefunden hat. Das Umorientieren der Fasern 25, 26 aus horizontaler (zur Oberseite 19 parallel) Richtung in vertikale Richtung bedeutet gleichzeitig eine Verfestigung des Fasermaterials an der betreffenden Stelle bzw. in der Zone 18. An der vertfestigten Zone 18 kann die Oberseite 19 und/oder die Unterseite 20 jeweils eine Eintiefung aufweisen.

Weil die Matte 12 an bestimmten Stellen zonenmäßig verfestigt und andere Stellen nicht verfestigt ist, bildet sich ein unterschiedliches Dichtegefüge über die Raumsegmente hinweg. Beispielsweise können außerhalb der verfestigten Zonen 18 (Hohl-)Räume 27 mit sehr geringer Dichte also geringen Faseranteil pro Volumeneinheit entstehen, in denen die Faserdichte geringer ist als die Dichte des übrigen Faserflors der Matte 12. Solche Räume 27 können unregelmäßig zum Beispiel etwa linsenförmig sein. Ihre Form und Anordnung hängt von der Form und Anordnung der verdichteten Zonen 18 ab.

Der Wirrfaserkörper 10 nach Figur 1 oder 3 weist gute Schalldämpfungseigenschaften auf. Er weist ein hohes Poren-und Luftvolumen auf. Auf das Dämpfungsmaterial 11 auftreffende Schallwellen dringen in das Dämpfungsmaterial 11 ein und werden dort verschluckt, also letztlich in Wärme umgesetzt. Dieser Effekt wird durch die vorzugsweise unregelmäßige Anordnung der Zonen 18 unterstützt, die die Ausbildung stehender Wellen unterdrücken und für ein breites Frequenzband eine zusätzliche Wellenauslöschung durch Interferenz bewirken können. Eine solche Interferenz kann innerhalb des Dämpfungsmaterials 11 wie auch außerhalb desselben stattfinden. Die verdichteten Zonen 18 können sich, wie Figur 3 zeigt, an der Oberfläche des Materials durch vorzugsweise unregelmäßig angeordnete Vertiefungen gebildet sein, die einen bestimmten Anteil der auftreffenden Schallenergie reflektieren und miteinander zur auslöschenden Interferenz beitragen.

Das Dämpfungsmaterial 11 kann auf verschiedene Weise ausgestaltet werden. Während die Zonen 18 bei den bisherigen Ausführungsformen als lokale Inseln, beispielsweise von rechteckigem, quadratischem, kreisförmigen oder anderweitigem Umriss ausgebildet sind, können sie auch streifenförmig ausgebildet sein, wie es Figur 4 zeigt. Die Streifen können eine gleichbleibende oder ein wechselnde Breite aufweisen. Die Streifen können eine einheitliche Breite oder unterschiedliche Breiten aufweisen.

Das Dämpfungsmaterial 11 nach Figur 4 weist mehrere Zonen 18, 28, 29 höherer Faserverschlingungen auf, von denen drei dargestellt sind. Diese Zonen erstrecken sich im Abstand parallel zueinander entlang zum Beispiel der Querrichtung der Matte 12 (rechtwinklig zu der Mattenlängsrichtung 21) in Figur 2 oder auch parallel zu dieser. Für die Zonen 18, 28, 29 gilt bezüglich der Faserorientierung das im Zusammenhang mit den Figuren 1 bis 3 bereits Gesagte. Zwischen den Zonen 18, 28, 29 sind unverfestigte Zonen 17, 30, 31 ausgebildet, die vorzugsweise den größeren Teil des Volumens des Dämpfungsmaterials 11 einnehmen. In diesen Zonen, beispielsweise in der Zone 29, können wiederum ein oder mehrere Hohlräume 27 ausgebildet sein. Zum Beispiel erstreckt sich ein solcher Hohlraum 27 wie ein länglicher Kanal parallel zu den benachbarten verfestigten Zonen 18, 28.

In den Dämpfungsmaterial 11 sind die Abstände der zueinander parallelen streifenförmigen verdichteten Zonen 18, 28, 29 unregelmäßig gewählt. Figur 4 veranschaulicht drei solcher Abstände L1, L2, L3. Die Abstände sind vorzugsweise nicht gleich. Idealerweise ist kein Abstand L1, L2, L3 usw. identisch. Die Breiten der Zonen 18,28, 29 sind vorzugsweise untereinander gleich.

Das Dämpfungsmaterial 11 nach Figur 4 kann in einer Apparatur nach Figur 2 erzeugt werden, indem eine Matte 12 eines Faserflors durch die Bearbeitungsstation 22 geführt wird. Die Fasern befinden sich locker geschichtet in vornehmlich horizontaler Ausrichtung und sind über eine bestimmte Höhe h gestapelt. Die Breite der Matte 12 ist beliebig. Praktischerweise bewegen sich diese Breiten zwischen 50cm und 5m. Die Matte 12 entstammt vorzugsweise einer Endlosfertigung und ist durch Abschneiden somit beliebig einstellbar.

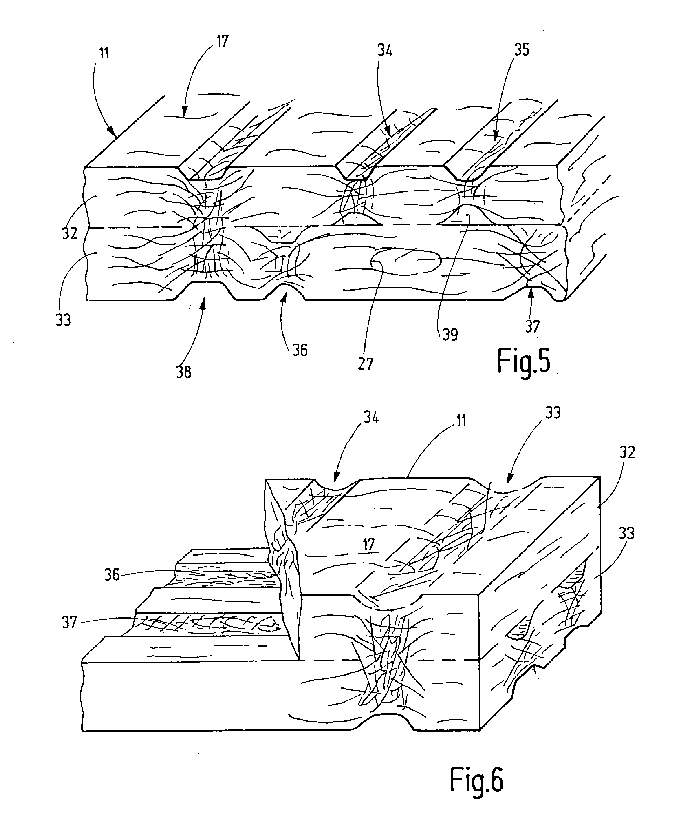

In Figur 5 ist ein Dämpfungsmaterial 11 mit Mehrschichtaufbau veranschaulicht. Das Material umfasst, wie dargestellt, zwei oder auch mehrere Schichten 32, 33, von denen wenigstens eine, vorzugsweise aber mehreren oder alle, eine oder mehrere verdichtete Zonen 34, 35, 36, 37 aufweisen. Hinsichtlich des Aufbaus der Schicht 32 gelten alle Ausführungen zu dem in Figur 4 angegebenen Ausführungsbeispiel entsprechend. Ebenso gelten für die Schicht 33, die im Zusammenhang mit Figur 4 gegebenen Erläuterungen entsprechend. Die Schichten 32, 33 können somit, wie im Zusammenhang mit Figur 4 erläutert, jeweils zunächst separat bereitgestellt und dann übereinander gelegt werden. Dabei können die verdichteten Zonen 34, 35 der oberen Schicht 32 parallel zu den verdichteten Zonen 36, 37 der unteren Schicht 33 orientiert werden, wobei sie vorzugsweise nicht deckungsgleich übereinander geführt werden. Dadurch ergibt sich, dass die Abstände der verdichteten Zonen 34, 35 der oberen Schicht 32 anders sein können als die Abstände zwischen den verdichteten Zonen 36, 37 der unteren Schicht 33. Die Schichten 32, 33 können sich hinsichtlich Anzahl und Position der verdichteten Zonen 34 bis 37 unterscheiden.

Es können beliebig viele solcher Schichten übereinander platziert sein. Dazwischen können sich bedarfsweise auch Schichten ohne verdichtete Zonen befinden.

Der Zusammenhalt der Schichten 32, 33 sowie aller weiterer gegebenenfalls vorhandener Schichten kann durch durchgehende verdichtete Zonen 38 geschaffen werden, die sich parallel zu den anderen verdichtenden Zonen 34 bis 37 oder auch quer zu diesen erstrecken. Die durchgehenden verdichteten Zonen 38 werden vorzugsweise erzeugt, nachdem die einzelnen Schichten 32, 33 übereinander gefügt worden sind. Sie können beispielsweise durch Wasserstrahlverfestigung oder jede andere in diesem Dokument genannten Verfestigungsart erzeugt werden. Vorzugsweise sind sie, wie dargestellt, streifenförmig. Es können jedoch auch lokale begrenzte im Unriss beispielsweise runde, ovale oder rechteckige durchgehende Verdichtungszonen geschaffen werden. In der verdichteten Zone 38 werden Fasern von der oberen Schicht 32 in die untere Schicht 33 übertragen. Zusätzlich oder alternativ können Fasern von der unteren Schicht 33 in die obere Schicht 32 übertragen worden sein. Wiederum ist wie bei allen anderen verdichteten Zonen auch die Verschlingung der Fasern in der verdichteten Zone 38 höher als in den umgebendem Material der ersten Zone 17. Die Verdichtung bzw. Verschlingung der Fasern in der Zone 38 kann ebenso groß sein wie in den Zonen 34 bis 37. Es ist aber auch möglich für die Zonen 34 bis 37 und 38 unterschiedliche Verschlingungs- und Verdichtungsgrade festzulegen.

Durch die Anzahl und Anordnung der verdichteten Zonen 34 bis 37 und 38 und deren Verdichtungsgrad sowie die Anzahl der Schichten 32, 33, usw. lassen sich die Dämpfungseigenschaften des Dämpfungsmaterials 11 in weiten Grenzen wunschentsprechend einstellen.

Das Dämpfungsmaterial 11 nach Figur 5 kann innerhalb der Schichten 32, 33 Hohlräume wie den bereits beschriebenen Hohlraum 27 aufweisen. Außerdem entstehen an den verdichteten Zonen 34, 35 sowie 36, 37 Hohlräume zur jeweils anderen Schicht hin. In Figur 5 ist ein solcher Hohlraum 39 zwischen der verdichteten Zone 35 und der Schicht 33 veranschaulicht. Solche Hohlräume können die Schalldämpfungseigenschaften verbessern. Die Abstände der verdichteten Zonen 34, 35, 36, 37, 38 voneinander sowie die geometrischen Abstände zu den Hohlräumen 27, 39 liegen vorzugsweise im Bereich der halben Wellenlänge der zu dämpfenden Schallwellen oder eines vielfachen der halben Wellenlänge. Soll beispielsweise insbesondere eine Frequenz von 200 Hz gedämpft werden, können die Abstände im Bereich von 85 cm liegen. Soll der Schwerpunkt der Dämpfungswirkung bei 2000 Hz liegen, ist es zweckmäßig Abstände im Beriech von 8,5 cm festzulegen. Durch Variation dieser Abstände kann ein breiteres Frequenzband abgedeckt werden.

Figur 6 veranschaulicht eine weitere Ausführungsform des erfindungsgemäßen Dämmmaterials 11 mit mindestens zwei Schichten 32, 33. Die Schichten 32, 33 sind hier quer zueinander orientiert. Während die verdichteten Zonen 36, 37 der unteren Schicht 33 in einer ersten Richtung verlaufen, sind die verdichteten Zonen der oberen Schicht (Zone 34) quer dazu orientiert. Die verbindende verdichtete Zone 38 kann sich parallel zu der Zone 34, quer zu den Zonen 36, 37 oder in einer eigenständigen anderen Richtung erstrecken. Durch die gegenseitige Überkreuzung der verdichteten Zonen 34 sowie 36 und 37 entstehen in dem Dämpfungsmaterial 17. zusätzliche Hohlräume, die die Schalldämpfungswirkung positiv beeinflussen können. In den Schichten 32, 33 können die Fasern in den nicht verdichteten Zonen 17 parallel zueinander oder auch in Kreuzlage zueinander orientiert sein.

Bei allen vorgestellten Ausführungsformen mit Mehrschichtaufbau lassen sich die Dämpfungseigenschaften zusätzlich beeinflussen, indem die Geometrie der erhaltenen Hohlräume und deren Abstand zueinander auf die zu dämmende Frequenz abgestimmt wird.

Außerdem können sich die Dämpfungseigenschaften dadurch einstellen lassen, dass die Schichten 32, 33 und gegebenenfalls weitere Schichten aus unterschiedlichen Grundfasermaterialien gebildet werden, so dass sich auf das räumliche Volumensegment gesehen unterschiedliche Massenverdichtungen ergeben. Außerdem ist es möglich, die Dichte des Faserflors quer zu der Mattenlängsrichtung 21 zu variieren.

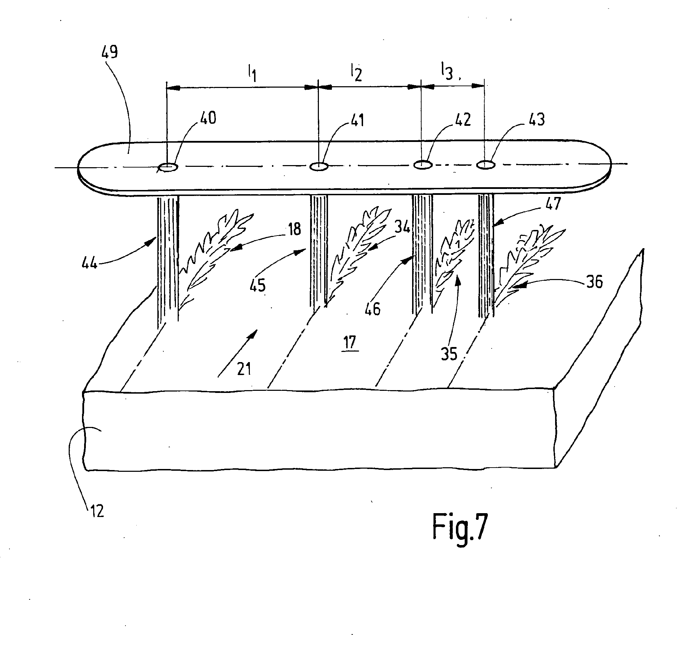

Figur 7 veranschaulicht den Verdichtungsprozess mittels Wasserstrahlverfahren schematisch. Die Matte 12 ist wiederum durch ein bekanntes Verfahren wie gegebenenfalls auch durch einen Kreuzleger ein oder mehrfach übereinander gelegt oder durch eine Spinnvlieserzeugung hergestellt worden. Diese Matte 12 bewegt sich in Richtung der Mattenlängsrichtung 21 unter einem an sich bekannten Düsenstreifen 49 einer Wasserstrahlverfestigungsanlage. Der Düsenstreifen 49 kann Teil eines der in Figur 2 veranschaulichten Organe 23, 24 sein. Der Düsenstreifen 49 enthält wiederum mindestens eine, vorzugsweise aber mehrere, Düsen-Cluster 40, 41, 42, 43 und gegebenenfalls noch mehreren solcher Düsen-Cluster. Die in Figur 7 schematisch durch Kreise symbolisierten Düsen-Cluster 40 bis 43 können jeweils durch eine Gruppe kleinerer linear oder in einem Array angeordneter Düsenöffnungen gebildet werden. Die Abstände zwischen diesen Düsen-Clustern L1, L2, L3 sind vorzugsweise nicht identisch miteinander.

Jedes Düsen-Cluster 40 bis 43 erzeugt ein Bündel 44, 45, 46, 47 von Wasserstrahlen, die auf die Oberfläche der Matte 12 auftreffen und in das Material der Matte eindringen. Die auftreffenden Wasserstrahlbündel 44 bis 47 bewirken eine Verwirbelung der Fasern in der Matte 12 und ein Umorientierung sowie Verschlingung derselben. Damit geht auch eine Verdichtung des Materials der Matte 12 einher, so dass sich im Verlauf des Arbeitsfortschritts die streifenförmigen verdichteten Zonen 18, 34, 35, 36 bilden. Der Durchmesser der Düsen-Cluster 40 bis 43 und der Druck des Wassers, das oberhalb des Düsenstreifens 49 ansteht, sind so gewählt, dass die Wasserstrahlbündel 44 bis 47 gerade eine Verwirbelung der Fasern vornehmen aber keine Trennung oder gar Zerstörung der Fasern bewirken. Dabei kommt es darauf an, dass zwischen den einzelnen Waeserstrahlbündeln 44 bis 47 jeweils ein Zwischenraum vorhanden ist, in dem keine Verfestigung der Matte 12 stattfindet, so dass sich hier zur Ausbildung der Zone 17 keine höhere Dichte des Flors ergibt. Eine Verdichtung der Matte 12 entsteht nur im Wirkbereich der Wasserstrahlbündel 44 bis 47. Es können weiterhin Vorkehrungen getroffen sein, um einzelne Wasserstrahlbündel 44 bis 47, beispielsweise das Wasserstrahlbündel 45 zeitweilig zu unterbrechen. Dies kann beispielsweise durch eine Abprallplatte bewirkt werden, die in dem Bereich des Wasserstrahlbündels 45 geschoben wird, um dieses zu unterbrechen. Dies bedeutet, dass bei einer Vorwärtsbewegung der Matte 12 unter dem Düsenstreifen 49 eine durch die gesamte Höhe der Matte durchgehende streifenförmige verdichtete Zone erzeugt wird, die in Mattenlängsrichtung 21 unterbrochen ist.

Das An- und Abschalten der Verdichtungswirkung kann nicht nur durch zeitweiliges Verdecken der einzelnen Düsen-Cluster 40 bis 43, sondern auch dadurch erzeugt werden, dass ganze Düsenstreifen, zum Beispiel der Organe 23, 24, usw., an- und abgeschaltet werden.

Das Verfahren ist insbesondere für Matten 12 aus Polyesterfasern geeignet. Es ist aber nicht auf ein spezielles Fasermaterial beschränkt. Außerdem ist die Herstellung des Dämpfungsmaterials 11 nicht nur mit Wasserstrahlverfestigung, sondern auch durch andere Verfahren zur lokalen Verfestigung der Matte 12 möglich. Es können Verfahren mit mechanischer Vernadelung oder thermischer Verfestigung zum Einsatz kommen. Wesentlich ist, dass in dem dämpfungsmaterial 11 gezielt Zonen mit unterschiedlicher Raumdichte erzeugt sind.

Ein erfindungsgemäßes Dämpfungsmaterial 11 besteht aus einem Grundmaterial, das aus Fasern gebildet ist, die in einem lockeren Zusammenhalt miteinander stehen. Beispielsweise sind die Fasern miteinander wenig verschlungen oder auch verklebt. Dieses Grundmaterial wird stellenweise verdichtet, indem die Fasern umorientiert und dadurch stärker miteinander verschlungen oder verklebt werden. Es entstehen somit Zonen 17 und 18 unterschiedlicher Verdichtung, wodurch sich die schalldämmende Wirkung des Dämpfungsmaterials, wie gewünscht, erhöhen und einstellen lässt.

### Bezugszeichenliste:

- 10: Wirrfaserkörper
- 11: Dämpfungsmaterial
- 12: Matte
- 13,14,15,16, 25, 26: Faser

- 17: Zone mit geringer Faserverschlingung
- 18: Zone mit höherer Faserverschlingung
- 19: Oberseite
- 20: Unterseite
- 21: Mattenlängsrichtung
- 22: Bearbeitungsstation
- 23,24: Organ

- 27, 39: Hohlraum
- 28, 29, 34, 35, 36,: Lineare Zone mit höherer Faserver-
- 37: schlingung

- 30, 31: Lineare Zone geringer Faserverfestigung

- 32: Obere Schicht
- 33: Untere Schicht

- 38: Durch Schichten 32, 33 durchgehende verdichtete Zone

- 40: Erster Düsen-Cluster
- 41: Zweiter Düsen-Cluster
- 42: Dritter Düsen-Cluster
- 43: Vierter Düsen-Cluster
- 44: Erstes Wasserstrahlbündel
- 45: Zweites Wasserstrahlbündel
- 46: Drittes Wasserstrahlbündel
- 47: viertes Wasserstrahlbündel

- 49: Düsenstreifen

## Patentansprüche

1. Akustisches Dämpfungsmaterial (11), bestehend aus einem Wirrfaserkörper (10), der aus miteinander verschlungenen Fasern (13, 14, 15, 16) ausgebildet ist und der wenigstens zwei räumliche Zonen (17, 18, 28, 29) unterschiedliche starker Faserverschlingung aufweist.

2. Dämpfungsmaterial nach Anspruch 1, **dadurch gekennzeichnet, dass** die beiden Zonen (17, 18, 28, 29) unterschiedlicher Faserverschlingung unterschiedliche Faserdichten aufweisen.

3. Dämpfungsmaterial nach Anspruch 1, **dadurch gekennzeichnet, dass** die räumlichen Zonen (17, 18, 28, 29) in einem unregelmäßigen Muster angeordnet sind.

4. Dämpfungsmaterial nach Anspruch 1, **dadurch gekennzeichnet, dass** die Fasern in Zonen (17) geringer Faserverschlingung vorwiegend in einer Ebene orientiert sind, während sie in Zonen (18, 28, 29) höherer Faserverschlingung zu einem größeren Anteil in eine Richtung senkrecht zu der Ebene orientiert sind.

5. Dämpfungsmaterial nach Anspruch 1, **dadurch gekennzeichnet, dass** Zonen (18, 28, 29) höherer Faserverschlingung als streifenförmige Bereiche ausgebildet sind.

6. Dämpfungsmaterial nach Anspruch 5, **dadurch gekennzeichnet, dass** die Zonen (18, 28, 29) in unterschiedlichen Abständen parallel zueinander angeordnet sind.

7. Dämpfungsmaterial nach Anspruch 1, **dadurch gekennzeichnet, dass** der Wirrfaserkörper (10) mehrere Schichten (32, 33) aufweist, die aus miteinander verschlungenen Fasern (25, 26) ausgebildet sind und von denen mindestens eine Schicht (32) die genannten Zonen (17, 34, 35) unterschiedlich starker Faserverschlingung aufweist.

8. Dämpfungsmaterial nach Anspruch 7, **dadurch gekennzeichnet, dass** mindestens zwei der genannten Schichten (32, 33) Zonen (17, 34, 35, 36, 37) mit unterschiedlichen Faserverschlingung aufweisen, die unterschiedlich angeordnet sind.

9. Dämpfungsmaterial nach Anspruch 8, **dadurch gekennzeichnet, dass** die Zonen (17, 34, 35, 36, 37) der Schichten (32, 33) streifenförmig ausgebildet und einander überkreuzend angeordnet sind.

10. Dämpfungsmaterial nach Anspruch 1, **dadurch gekennzeichnet, dass** der Faserkörper (10) Hohlräume (27, 39) enthält, die von Fasern frei sind oder eine gegenüber dem umgebenden Faserkörper (10) eine erheblich reduzierte Faserdichte aufweisen.
